# EUROPEAN PATENT SPECIFICATION

(11) **EP 1 117 253 B1**
(45) Date of publication and mention of the grant of the patent: **19.07.2006**
(21) Application number: 00309853.0
(22) Date of filing: 06.11.2000
(51) Int. Cl.: H04N 5/44

(54) **High gain intermediate frequency input circuit with satisfactory trap characteristics**
Zwischenfrequenz-Eingangsschaltung mit hoher Verstärkung und mit zufriedenstellenden Bandsperrcharakteristiken
Circuit d' entrée à fréquence intermédiaire à gain élevé et avec caractéristiques de coupe-bande satisfaisantes

(30) Priority: 12.01.2000 JP 2000003723
(43) Date of publication of application: 18.07.2001
(73) Proprietor: ALPS ELECTRIC CO., LTD., Ota-ku Tokyo 145 (JP)
(72) Inventor: Yamamoto, Masaki, Otsuka-cho, Ota-ku, Tokyo (JP)
(74) Representative: Kensett, John Hinton

(56) References cited:
- DE-A- 19 734 026

## Description

### BACKGROUND OF THE INVENTION

The present invention relates to intermediate frequency input circuits, and more particularly, it relates to an intermediate frequency input circuit, which is connected between output ends of a frequency mixing circuit and input ends of an intermediate frequency amplifier circuit, in which an intermediate frequency characteristic of a selector channel and trap characteristics of intermediate frequency components of upper and lower adjacent channels can be selected.

In conventional television tuners, an intermediate frequency input circuit is connected between output ends of a frequency mixing circuit and input ends of an intermediate frequency amplifier circuit. The intermediate frequency input circuit selectively allows an intermediate frequency of a selector channel to pass through and rejects unnecessary frequency components near the intermediate frequency, such as an intermediate frequency component of an upper adjacent channel and an intermediate frequency component of a lower adjacent channel. Accordingly, high-level unnecessary frequency components are not input to the intermediate frequency amplifier circuit.

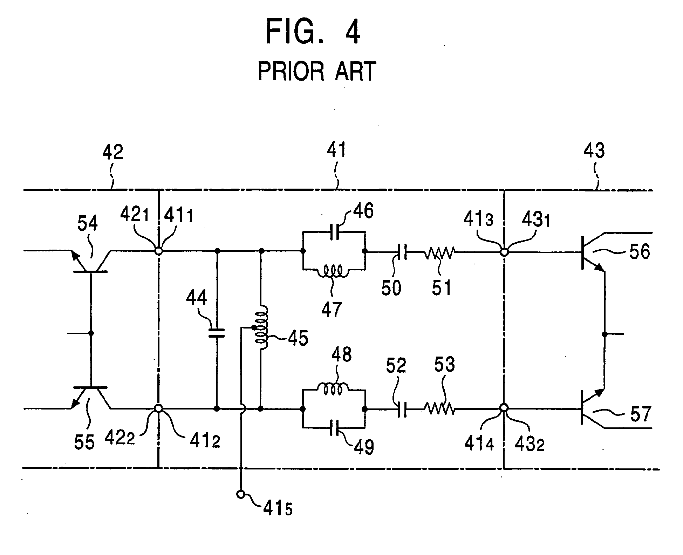

Fig. 4 shows an example of the structure of a typical known intermediate frequency input circuit. A similar circuit is known from DE-A-197 34 026.

Referring to Fig. 4, an intermediate frequency input circuit 41 is connected between a frequency mixing circuit 42 provided at a previous stage and an intermediate frequency amplifier circuit 43 provided at a subsequent stage.

The intermediate frequency input circuit 41 includes a pair of input ends 41₁ and 41₂, a pair of output ends 41₃ and 41₄, a power supply terminal 41₅, a first capacitor 44, a first inductor 45 with a center tap, a second capacitor 46, a second inductor 47, a third inductor 48, a third capacitor 49, a fourth capacitor 50, a first resistor 51, a fifth capacitor 52, and a second resistor 53. The frequency mixing circuit 42 includes a pair of output ends 42₁ and 42₂ and a pair of output transistors 54 and 55 in grounded-base connection. The intermediate frequency amplifier circuit 43 includes a pair of input ends 43₁ and 43₂ and a pair of input transistors 56 and 57 in grounded-emitter connection.

In the intermediate frequency input circuit 41, the first capacitor 44 and the first inductor 45 are connected in parallel between the pair of input ends 41₁ and 41₂. The center tap of the first inductor 45 is connected to the power supply terminal 41₅. Between one input end 41₁ and one output end 41₃, a parallel connection circuit including the second capacitor 46 and the second inductor 47, the fourth capacitor 50, and the first resistor 51 are connected in series. Between the other input end 41₂ and the other output end 41₄, a parallel connection circuit including the third inductor 48 and the third capacitor 49, the fifth capacitor 52, and the second resistor 53 are connected in series. In the frequency mixing circuit 42, a collector of the output transistor 54 is connected to one output end 42₁, and a collector of the output transistor 55 is connected to the other output end 42₂. In the intermediate frequency amplifier circuit 43, a base of one input transistor 56 is connected to one input end 43₁, and a base of the other input transistor 57 is connected to the other input end 43₂. The pair of input ends 41₁ and 41₂ of the intermediate frequency input circuit 41 is connected to the pair of output ends 42₁ and 42₂ of the frequency mixing circuit 42. The pair of output ends 41₃ and 41₄ of the intermediate frequency input circuit 41 is connected to the pair of input ends 43₁ and 43₂ of the intermediate frequency amplifier circuit 43.

In this case, in the intermediate frequency input circuit 41, the capacitance of the first capacitor 44 and the inductance of the first inductor 45 are selected so that the first capacitor 44 and the first inductor 45 are in parallel resonance with an intermediate frequency of a selector channel. The capacitance of the second capacitor 46 and the inductance of the second inductor 47 are selected so that the second capacitor 46 and the second inductor 47 are in parallel resonance with an intermediate frequency component of an upper adjacent channel, thus forming a first trap circuit for trapping the intermediate frequency component of the upper adjacent channel. The capacitance of the third inductor 48 and the inductance of the third capacitor 49 are selected so that the third inductor 48 and the third capacitor 49 are in parallel resonance with an intermediate frequency component of a lower adjacent channel, thus forming a second trap circuit for trapping the intermediate frequency component of the lower adjacent channel.

With this arrangement, the known intermediate frequency input circuit 41 operates as follows.

An intermediate frequency signal (hereinafter referred to as an "IF signal") of a selector channel, which includes unnecessary frequency components, is output from the pair of output ends 42₁ and 42₂ of the frequency mixing circuit 42. The IF signal is then input to the intermediate frequency input circuit 41 from the pair of input ends 41₁ and 41₂. In the intermediate frequency input circuit 41, a parallel resonance circuit including the first capacitor 44 and the first inductor 45 selects an intermediate frequency of a selector channel from the IF signal. Subsequently, the first trap circuit for trapping the intermediate frequency component of the upper adjacent channel, which includes the second capacitor 46 and the second inductor 47, traps an intermediate frequency component of an upper adjacent channel, which is above and adjacent to the selector channel, in the IF signal of the selector channel. The second trap circuit for trapping the intermediate frequency component of the lower adjacent channel, which includes the third inductor 48 and the third capacitor 49, traps an intermediate frequency component of a lower adjacent channel, which is below and adjacent to the selector channel, in the IF signal of the selector channel. Subsequently, the IF signal that has passed through the first trap circuit passes through the fourth capacitor 50, which is a coupling capacitor. The first resistor 51 adjusts the level of the IF signal, and the IF signal is supplied to one output end 41₃. Simultaneously, the IF signal that has passed through the second trap circuit passes through the fifth capacitor 52, which is a coupling capacitor. The second resistor 53 adjusts the level of the IF signal, and the IF signal is output to the other output end 41₄. Subsequently, the IF signal obtained at the pair of output ends 41₃ and 41₄ is supplied to the pair of input ends 43₁ and 43₂ of the intermediate frequency amplifier circuit 43, and the input IF signal is amplified by the pair of input transistors 56 and 57.

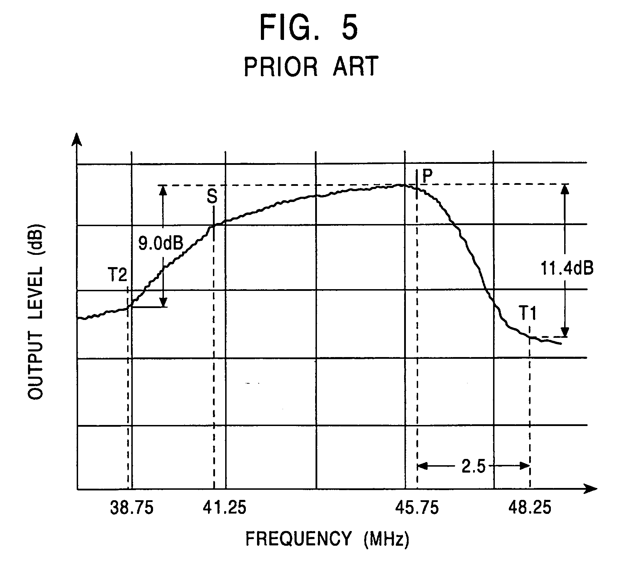

Fig. 5 shows an example of a frequency characteristic of the intermediate frequency input circuit 41 shown in Fig. 4.

Referring to Fig. 5, reference symbol P denotes a picture frequency in the intermediate frequency of the selector channel. Reference symbol S denotes a sound frequency in the intermediate frequency of the selector channel. Reference symbol T1 denotes the intermediate frequency component of the lower adjacent channel (N-1) of the selector channel (N). Reference symbol T2 denotes the intermediate frequency component of the upper adjacent channel (N+1) of the selector channel (N).

As shown in Fig. 5, the known intermediate frequency input circuit 41 has a selective characteristic for the intermediate frequency of the selector channel, and has trap characteristics for the intermediate frequency components of the lower adjacent channel and of the upper adjacent channel. The level difference between the peak level of the intermediate frequency of the selector channel and the trap level of the intermediate frequency component of the lower adjacent channel is approximately 11.4 dB. The level difference between the peak level of the intermediate frequency of the selector channel and the trap level of the intermediate frequency component of the upper adjacent channel is approximately 9.0 dB. The rejection of unnecessary frequency components, i.e., the intermediate frequency component of the lower adjacent channel and the intermediate frequency component of the upper adjacent channel, is not satisfactory. A gain for the intermediate frequency of the selector channel is not satisfactory.

### SUMMARY OF THE INVENTION

In view of the above circumstances, it is an object of the present invention to provide an intermediate frequency input circuit having a high gain for an intermediate frequency of a selector channel and a satisfactory trap characteristic for intermediate frequency components of an upper adjacent channel and a lower adjacent channel.

To this end, according to the present invention, an intermediate frequency input circuit is provided, which is connected between output ends of a frequency mixing circuit and input ends of an intermediate frequency amplifier circuit. The intermediate frequency input circuit includes a pair of input ends and a pair of output ends. A parallel resonance circuit, which is connected between the pair of input ends, resonates with an intermediate frequency of a selector channel. A series circuit, which is connected between one of the pair of input ends and one of the pair of output ends, includes a first trap circuit for trapping an intermediate frequency component of an upper adjacent channel and a first resistor. Another series circuit, which is connected between the other of the pair of input ends and the other of the pair of output ends, includes a second trap circuit for trapping an intermediate frequency component of a lower adjacent circuit and a second resistor. A parallel circuit, which is connected between the pair of output ends, includes a third resistor and a capacitor.

With this arrangement, the parallel circuit, which includes the third resistor and the capacitor, is connected between the pair of output ends. Compared with a characteristic of a known intermediate frequency input circuit, a high gain characteristic for the intermediate frequency of the selector channel is obtained. It is also possible to obtain satisfactory trap characteristics for the intermediate frequency component of the upper adjacent channel and for the intermediate frequency component of the lower adjacent channel. Hence, the characteristic of the intermediate frequency input circuit is overall satisfactory.

### BRIEF DESCRIPTION OF THE DRAWINGS

Fig. 1 is a circuit diagram of an intermediate frequency input circuit according to an embodiment of the present invention;
Fig. 2 is a graph showing an example of a frequency characteristic of the intermediate frequency input circuit shown in Fig. 1;
Fig. 3 is a graph showing another example of a frequency characteristic of the intermediate frequency input circuit shown in Fig. 1;
Fig. 4 is a circuit diagram of an example of the structure of a known intermediate frequency input circuit; and
Fig. 5 is a graph showing an example of a frequency characteristic of the intermediate frequency input circuit shown in Fig. 4.

### DESCRIPTION OF THE PREFERRED EMBODIMENTS

The present invention will be understood from the following description of the preferred embodiments taken in conjunction with the accompanying drawings.

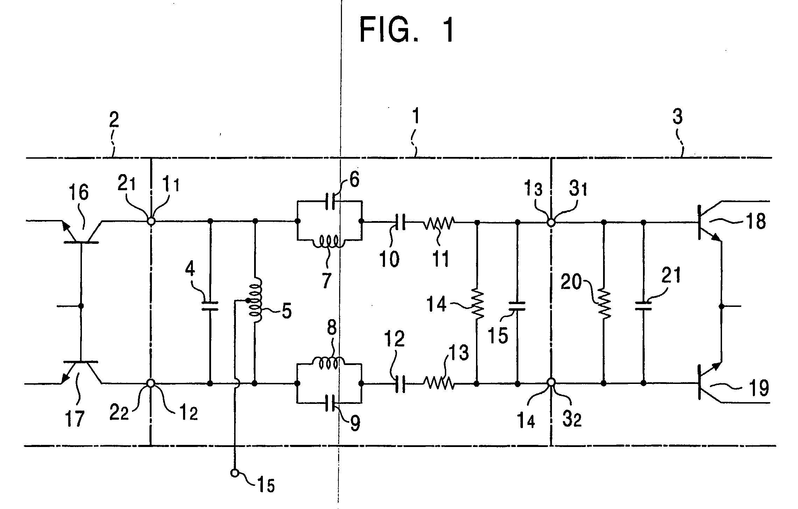

Fig. 1 shows the structure of an intermediate frequency input circuit according to an embodiment of the present invention.

Referring to Fig. 1, as in the known intermediate frequency input circuit 41, an intermediate frequency input circuit 1 of the present embodiment is connected between a frequency mixing circuit 2, which is disposed at a previous stage and has a high output impedance characteristic, and an intermediate frequency amplifier circuit 3, which is disposed at a subsequent stage and has a low input impedance characteristic.

The intermediate frequency input circuit 1 includes a pair of input ends 1₁ and 1₂, a pair of output ends 1₃ and 1₄, a power supply terminal 1₅, a first capacitor 4, a first inductor 5 with a center tap, a second capacitor 6, a second inductor 7, a third inductor 8, a third capacitor 9, a fourth capacitor 10, a first resistor 11, a fifth capacitor 12, a second resistor 13, a third resistor 14, and a sixth capacitor 15. The frequency mixing circuit 2 includes a pair of output ends 2₁ and 2₂ and a pair of output transistors 16 and 17 in grounded-base connection. The intermediate frequency amplifier circuit 3 includes a pair of input ends 3₁ and 3₂, a pair of input transistors 18 and 19 in grounded-emitter connection, a resistor 20, and a capacitor 21.

In the intermediate frequency input circuit 1, the first capacitor 4 and the first inductor 5 are connected in parallel between the pair of input ends 1₁ and 1₂. The center tap of the first inductor 5 is connected to the power supply terminal 1₅. Between one input end 1₁ and one output end 1₃, a parallel connection circuit, which is a first trap circuit described hereinafter, including the second capacitor 6 and the second inductor 7, the fourth capacitor 10, and the first resistor 11 are connected in series. Between the other input end 1₂ and the other output end 1₄, a parallel connection circuit, which is a second trap circuit described hereinafter, including the third inductor 8 and the third capacitor 9, the fifth capacitor 12, and the second resistor 12 are connected in series. Between the pair of output ends 1₃ and 1₄, the third resistor 14 and the sixth capacitor 15 are connected in series.

In the frequency mixing circuit 2, a collector of one output transistor 16 is connected to one output end 2₁, and a collector of the other output transistor 17 is connected to the other output end 2₂. In the intermediate frequency amplifier circuit 3, the resistor 20 and the capacitor 21 are connected in parallel between the pair of input ends 3₁ and 3₂. A base of one input transistor 18 is connected to one input end 3₁, and a base of the other input transistor 19 is connected to the other input end 3₂. The pair of input ends 1₁ and 1₂ of the intermediate frequency input circuit 1 is connected to the pair of output ends 2₁ and 2₂ of the frequency mixing circuit 2. The pair of output ends 1₃ and 1₄ of the intermediate frequency input circuit 1 is connected to the pair of input ends 3₁ and 3₂ of the intermediate frequency amplifier circuit 3.

In this case, in the intermediate frequency input circuit 1, the capacitance of the first capacitor 4 and the inductance of the first inductor 5 are selected so that the first capacitor 4 and the first inductor 5 are in parallel resonance with an intermediate frequency of a selector channel. The capacitance of the second capacitor 6 and the inductance of the second inductor 7 are selected so that the second capacitance 6 and the second inductor 7 are in parallel resonance with an intermediate frequency component of an upper adjacent channel, thus forming the first trap circuit for trapping the intermediate frequency component of the upper adjacent channel. The inductance of the third inductor 8 and the capacitance of the third capacitor 9 are selected so that the third inductor 8 and the third capacitor 9 are in parallel resonance with an intermediate frequency component of a lower adjacent channel, thus forming the second trap circuit for trapping the intermediate frequency component of the lower adjacent channel. By adjusting the resistance of the third resistor 14, trap characteristics for the intermediate frequency component of the upper adjacent channel and for the intermediate frequency component of the lower adjacent channel are adjusted. By adjusting the capacitance of the sixth capacitor 15, the intermediate frequency bandwidth of the selector channel is adjusted.

With this arrangement, the intermediate frequency input circuit 1 operates as follows.

An intermediate frequency signal (hereinafter referred to as an "IF signal") of a selector channel, which includes unnecessary frequency components, is output from the pair of output ends 2₁ and 2₂ of the frequency mixing circuit 2. The IF signal is then input to the intermediate frequency input circuit 1 from the pair of input ends 1₁ and 1₂. In the intermediate frequency input circuit 1, a parallel resonance circuit including the first capacitor 4 and the first inductor 5, which is in parallel resonance with an intermediate frequency of the selector channel, primarily selects the intermediate frequency of the selector channel in the IF signal. Subsequently, the first trap circuit, which includes the second capacitor 6 and the second inductor 7, for trapping the intermediate frequency component of the upper adjacent channel traps the intermediate frequency component of the upper adjacent channel, which is above and adjacent to the selector channel, in the intermediate frequency of the selector channel. The second trap circuit, which includes the third inductor 8 and the third capacitor 9, for trapping the intermediate frequency component of the lower adjacent channel traps the intermediate frequency component of the lower adjacent channel, which is below and adjacent to the selector channel, in the intermediate frequency of the selector channel. Subsequently, the IF signal in which the intermediate frequency component of the upper adjacent channel is trapped by the first trap circuit passes through the fourth capacitor 10, which is a coupling capacitor, and the level of the IF signal is adjusted by the first resistor 11. At the same time, the IF signal in which the intermediate frequency component of the lower adjacent channel is trapped by the second trap circuit passes through the fifth capacitor 12, which is a coupling capacitor, and the level of the IF signal is adjusted by the second resistor 13. Subsequently, a parallel circuit including the third resistor 14 and the sixth capacitor 15 adjusts the intermediate frequency bandwidth, the intermediate frequency peak level, the level difference between the intermediate frequency peak level and the trap level of the intermediate frequency component of the lower adjacent channel, and the level difference between the intermediate frequency peak level and the trap level of the intermediate frequency component of the upper adjacent channel. The adjusted IF signal is supplied to the pair of output ends 1₃ and 1₄. The IF signal supplied to the pair of output ends 1₃ and 1₄ is applied to the pair of input ends 3₁ and 3₂ of the intermediate frequency amplifier circuit 3, and the IF signal is amplified by the pair of input transistors 18 and 19.

In the following description, adjustment of each part of the IF signal performed by changing the resistance of the third resistance 14 and the capacitance of the sixth capacitor 15 is described in detail.

As the resistance of the third resistor 14 decreases, the intermediate frequency peak level gradually decreases, whereas the trap level of the intermediate frequency component of the lower adjacent channel and the trap level of the intermediate frequency component of the upper adjacent channel decreases to a greater extent than the decrease of the intermediate frequency peak level. Hence, the difference (suppression ratio) becomes greater between the intermediate frequency peak level and the trap level of the intermediate frequency component of the lower adjacent channel, and the difference (suppression ratio) becomes greater between the intermediate frequency peak level and the trap level of the intermediate frequency component of the upper adjacent channel. In contrast, as the resistance of the third resistor 14 increases, the intermediate frequency peak level gradually increases, whereas the trap level of the intermediate frequency component of the lower adjacent channel and the trap level of the intermediate frequency component of the upper adjacent channel increase to a greater extent than the increase of the intermediate frequency peak level. Hence, the difference (suppression ratio) becomes smaller between the intermediate frequency peak level and the trap level of the intermediate frequency component of the lower adjacent channel, and the difference (suppression ratio) becomes smaller between the intermediate frequency peak level and the trap level of the intermediate frequency component of the upper adjacent channel.

As the capacitance of the sixth capacitor 15 increases, the high band in the intermediate frequency band of the selector channel gradually becomes broader. In contrast, as the capacitance of the sixth capacitor 15 decreases, the high band in the intermediate frequency band of the selector channel gradually becomes narrower.

As the resistance of the first resistor 11 decreases, the high level of the intermediate frequency band of the selector channel gradually increases. As the resistance of the first resistor 11 increases, the high level of the intermediate frequency band of the selector channel gradually decreases. Similarly, as the resistance of the second resistor 13 decreases, the low level of the intermediate frequency band of the selector channel gradually increases. As the resistance of the second resistor 13 increases, the low level of the intermediate frequency band of the selector channel gradually decreases.

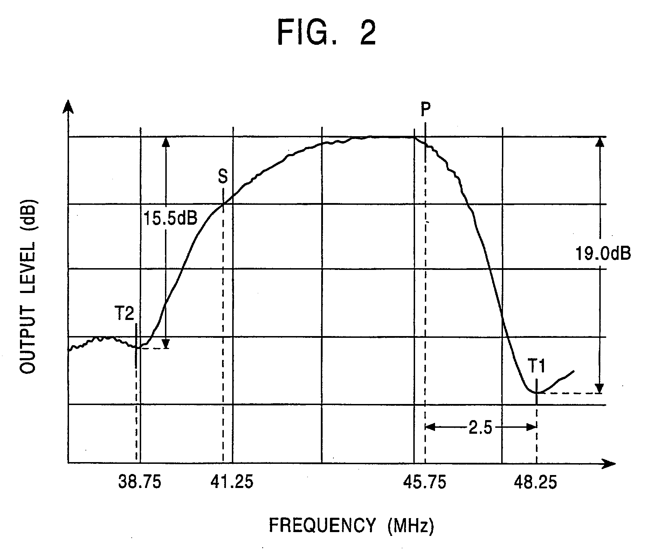

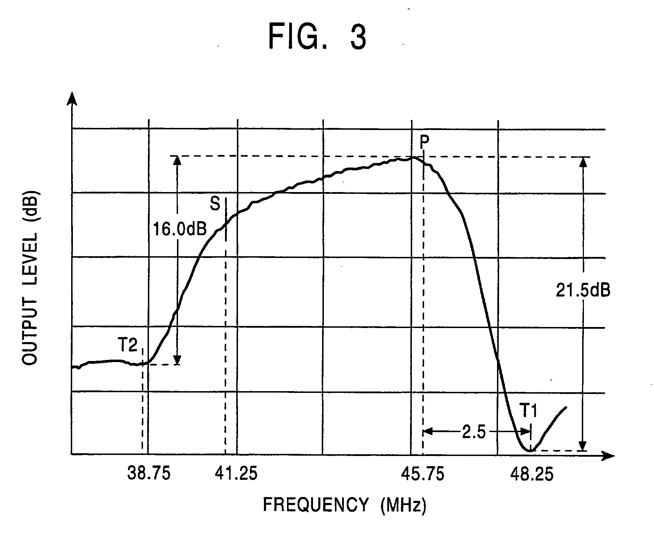

Fig. 2 shows a graph of an example of a frequency characteristic of the intermediate frequency input circuit 1 shown in Fig. 1. Fig. 3 shows a graph of another example of a frequency characteristic of the intermediate frequency input circuit 1 shown in Fig. 1. The characteristics shown in Figs. 2 and 3 differ in that the resistance of the third resistor 14 is changed.

Referring to Figs. 2 and 3, reference symbol P denotes a picture frequency of the intermediate frequency of the selector channel. Reference symbol S denotes a sound frequency of the intermediate frequency of the selector channel. Reference symbol T1 denotes the intermediate frequency component of the lower adjacent channel (N-1) of the selector channel (N). Reference symbol T2 denotes the intermediate frequency component of the upper adjacent channel (N+1) of the selector channel (N).

As shown in Fig. 2, in the intermediate frequency input circuit 1, the resistance of the third resistor 14 is changed to a high value (hereinafter this is referred to as the first embodiment). The intermediate frequency peak level increases. In contrast, the difference (suppression ratio) between the intermediate frequency peak level and the trap level of the intermediate frequency component of the lower adjacent channel is 19.0 dB, and the difference (suppression ratio) between the intermediate frequency peak level and the trap level of the intermediate frequency component of the upper adjacent channel is 15.5 dB. From a comparison between the suppression ratios of 19.0 dB and 15.5 dB of the intermediate frequency input circuit 1 of the first embodiment and the suppression ratios of 11.4 dB and 9.0 dB of the known intermediate frequency input circuit 41 shown in Fig. 5, it can be concluded that the suppression ratios of the intermediate frequency input circuit 1 of the first embodiment are much greater. Hence, the intermediate frequency input circuit 1 with large suppression ratios is obtained.

In contrast, as shown in Fig. 3, in the intermediate frequency input circuit 1, the resistance of the third resistor 14 is changed to a low value (hereinafter this is referred to as a second embodiment). Although the intermediate frequency peak level is somewhat smaller that that of the intermediate frequency input circuit 1 of the first embodiment, the difference (suppression ratio) between the intermediate frequency peak level and the trap level of the intermediate frequency component of the lower adjacent channel is 21.5 dB and the difference (suppression ratio) between the intermediate frequency peak level and the trap level of the intermediate frequency component of the upper adjacent channel is 16.0 dB. From a comparison between the suppression ratios of 21.5 dB and 16.0 dB of the intermediate frequency input circuit 1 of the second embodiment and the suppression ratios of 11.4 dB and 9.0 dB of the known intermediate frequency input circuit 41 shown in Fig. 5, it can be concluded that the suppression ratios of the intermediate frequency input circuit 1 of the second embodiment are much greater. Hence, the intermediate frequency input circuit 1 with large suppression ratios is obtained. The intermediate frequency input circuit 1 of the second embodiment has larger suppression ratios than the intermediate frequency input circuit 1 of the first embodiment.

## Claims

1. An intermediate frequency input circuit, which is connected between output ends of a frequency mixing-circuit (2) and input ends of an intermediate frequency amplifier circuit (3), said intermediate frequency input circuit comprising:
a pair of input ends (1₁, 1₂);
a pair of output ends (1₃, 1₄);
a parallel resonance circuit (4, 5), which is connected between the pair of input ends, resonating with an intermediate frequency of a selector channel;
a series circuit, which is connected between one of the pair of input ends and one of the pair of output ends, including a first trap circuit (6, 7) for trapping an intermediate frequency component of an upper adjacent channel and a first resistor (11);
a series circuit, which is connected between the other of the pair of input ends and the other of the pair of output ends, including a second trap circuit (8, 9) for trapping an intermediate frequency component of a lower adjacent channel and a second resistor (13); and
a parallel circuit, which is connected between the pair of output ends, including a third resistor (14) and a capacitor (15).

## Patentansprüche

1. Zwischenfrequenzeingangsschaltung, die zwischen Ausgabe-Enden einer Frequenzmischschaltung (2) und Zuführ-Enden einer Zwischenfrequenzverstärkerschaltung (3) geschaltet ist, wobei die Zwischenfrequenzeingangsschaltung aufweist:
ein Paar Zuführ-Enden (1₁, 1₂);
ein Paar Ausgabe-Enden (1₃, 1₄);
eine Parallel-Resonanz-Schaltung (4, 5), die zwischen das Paar Zuführ-Enden geschaltet ist und mit einer Zwischenfrequenz eines Wählerkanals schwingt;
eine Reihenschaltung, die zwischen eines des Paares Zuführ-Enden und eines des Paares Ausgabe-Enden geschaltet ist und die eine erste Sperrschaltung (6, 7) zum Sperren einer Zwischenfrequenzkomponente eines oberen benachbarten Kanals und einen ersten Widerstand (11) umfasst;
eine Reihenschaltung, die zwischen das andere des Paares Zuführ-Enden und das andere des Paares Ausgabe-Enden geschaltet ist und die eine zweite Sperrschaltung (8, 9) zum Sperren einer Zwischenfrequenzkomponente eines niedrigeren benachbarten Kanals und einen zweiten Widerstand (13) umfasst; und
eine Parallelschaltung, die zwischen das Paar Ausgabe-Enden geschaltet ist und die einen dritten Widerstand (14) und einen Kondensator (15) umfasst.

## Revendications

1. Circuit d'entrée à fréquence intermédiaire, connecté entre des extrémités de sortie d'un circuit mélangeur de fréquence (2) et des extrémités d'entrée d'un circuit amplificateur de fréquence (3), ledit circuit d'entrée à fréquence intermédiaire comprenant :
une paire d'extrémités d'entrée (1₁,1₂) ;
une paire d'extrémités de sortie (1₃, 1₄) ;
un circuit de résonance parallèle (4, 5), connecté entre la paire d'extrémités d'entrée, résonant avec une fréquence intermédiaire d'un canal sélecteur ;
un circuit en série, connecté entre une de la paire d'extrémités d'entrée et une de la paire d'extrémités de sortie, incluant un premier circuit coupe-bande (6, 7) pour piéger une composante de fréquence intermédiaire d'un canal supérieur adjacent et d'une première résistance (11) ;
un circuit en série, connecté entre l'autre de la paire d'extrémités d'entrée et l'autre de la paire d'extrémités de sortie, incluant un deuxième circuit coupe-bande (8, 9) pour piéger une composante de fréquence intermédiaire d'un canal inférieur adjacent et d'une deuxième résistance (13) ; et
un circuit en parallèle, connecté entre la paire d'extrémités de sortie, incluant une troisième résistance (14) et un condensateur (15).
